# EUROPEAN PATENT APPLICATION

(11) **EP 1 700 833 A2**
(43) Date of publication of application: **13.09.2006**
(21) Application number: 04385003.1
(22) Date of filing: 20.08.2004
(51) Int. Cl.: C04B 7/12, C04B 7/13

(54) **Method of morphological design of pozzolanes to control the technical characteristics of the cements to which they are added**

(30) Priority: 22.08.2003 ES 200302010
(71) Applicant: Associacion de Investigacion de las Industrias de la Contruccion (AIDICO), 46980 Paterna (Valencia) (ES)
(72) Inventor: The designation of the inventor has not yet been filed
(74) Representative: Munoz Garcia, Antonio

(57) **Abstract**

The object of this Patent is a "Morphological method of design of puzolanes to control the technical characteristics of the cements to which they are added", whose use is explicit in the statement of the invention itself.

It comprises the following operations :
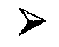 Selecting the puzolanes, according to the strong activity that they are capable to develop and to the planned application of the cement to which they shall be added.
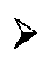 Grinding them preferably by means of any known method so that the granulemetrics is suitable to the mechanical requirements planned for the cement.
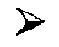 Changing the primitive global morphology of the puzolanes, by means of physical treatments of aggregation of their particles in the presence of liquid such as granulation in an agitator of revolving shovels (2); atomization in a whirlwind (3) for the centrifuge separation of the particles in suspension, peletization in a revolving drum (4).
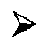 Adding the puzolane aggregates (5) for their measured addition to the cement, those aggregates consisting of just one type or several types of puzolanes.

## Description

### OBJECT OF THE INVENTION

The invention protected in this Patent refers to an object, which consists of a "Method of morphological design of puzolanes to control the technical characteristics of the cements to which they are added".

### BACKGROUND.

The cements with puzolane additions to which the claimed method is of specific application, emerge as a possibility of improvement of the Portland cement properties due to its property to react with the calcium hydroxide released during the hydratation, fixing it and so minimizing the instability effects, as well as minimizing also the reaction of expansive nature of the calcium aluminates with the sulphates of the environment, which is derived from the high pH of it.

The use of puzolanes both natural and artificial becomes important due to the policy of environmental conservation (reduction of gas emissions to the atmosphere, saving of energy cost in the cement production) insofar as they replace parts of this one. It is worth pointing out that the production of one ton of Portland cement needs 3,530 kJ of energy and that the use of puzolanes allows up to 20% of reduction in the consumption of cement (limited by current regulations).

The puzolanes used may be of natural or artificial origin, from both natural resources (volcanic rocks) and combustion processes of some industries or natural waste from mines.

The pastes, mortars and concretes prepared with cements with puzolane additions develop high mechanical resistances to long times of forging, being during the first days lower to those resistances developed by analogous conventional products. That is due to the double function of the puzolanes : in one way they accelerate the forging reaction and, in another, they fix the lime released in said reaction. The kinetics of the puzolane reaction has a direct influence on the development of mechanical resistances (mainly compression) of the forged product, said resistances increasing proportionally to the increase of the contents of combined lime in the product.

### DESCRIPTION OF THE INVENTION.

The purpose of the Invention that is the object of this Patent consists in the obtaining of hydraulic concretes and mortars prepared with cements with added puzolanes morphologically treated prior to their use. The following functional advantages may be obtained in this way :
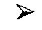 Controlling the forging reaction, according to what is previously presented.
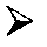 Increasing the puzolane activity within the first days of cure.
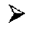 Adjusting the speed of reaction, by means of the granulemetrics (the smaller the size of the particle, higher reactivity), and the addition of the puzolane particles.
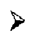 Increasing the mechanical resistances (mainly compression) of the forged product, according to the nature, the granulemetrics and the aggregates of puzolane particles.
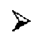 Obtaining hydraulic concretes and mortars of specific mechanical characteristics, by the use of cements with addition of aggregates of puzolane particles in suitable proportions, according to their nature and their granulemetrics.

From the preceding description of the obtained functional advantages, it is clear the essentiality of the morphological treatment of the puzolanes in order to reach them. That treatment consists in the textural change of the selected puzolanes, by means of physical processes capable of forming aggregates (granulation, atomization, peletization).

The starting point are the puzolanes with the right granulemetrics in order to reach the required speed of reaction. If natural puzolanes are used, which require a previous thermal treatment (e.g. clays), after the grinding and the treatment, it is necessary to make sure that the size of the particle is still the right one, so a second grinding is sometimes necessary.

Afterwards, the puzolane is subject to the selected physical treatment of aggregation, according to the required reaction speed. Compact aggregates tend to slow puzolane reactions, whereas the porous ones tend to fast reactions, having the hollow aggregates a shorter life span. In any case, on equal granulemetrics, the formation of aggregates shall slow down the puzolane reaction as regards the reaction speed that the same added puzolane would have should it not be subject to the morphological treatment.

The treated puzolane is ready to be added to the cement, according to the proportion and the optimal ratio water/solid, depending on the used puzolane and the application for which it is set aside.

The morphological treatment has two effects on the puzolane reaction: on one hand, it reduces the global specific surface, without modifying the granulemetrics, and on the other hand, the formation of the granule measures the fixing of lime by the puzolane. The smaller specific surface of the granule reduces the acceleration of the forging reaction by the puzolane, reducing the number of reaction points in the system at the same time, since the puzolane is not so avid for the lime formed in that reaction. This leads to an improvement of the mechanical resistances developed within the first days of cure. Moreover, due to the fact that the puzolane reaction is developed in layers (from the outside of the granule to the inside of it), it allows to prolong the fixing of lime, allowing high mechanical resistances, to long times of cure.

In short, the granule reduces the immediate effectiveness of the puzolane, slowing down the reactions and allowing them to prolong with higher effectiveness.

Moreover, the morphologic treatment described allows to prepare granules consisting of different puzolanes selected according to the mechanical characteristics that the cements to which they are added should have. Those granules may consist of the previous mixture of several puzolanes in order to give an homogenous granule or one of layers from different puzolanes with different reaction speeds, allowing a higher control on the forging reactions.

So, the kinetics of the puzolane reaction is determined by parameters such as the nature of the selected puzolanes itself, their granulemetrics and the shape and size of the aggregates that are formed with the puzolanes particles. Therefore, the operations that the claimed method comprises are aimed to the action on each one of those parameters and are the following, described with the same sequence as they are carried out :
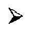 Selecting the puzolanes (natural or artificial), according to the strong activity that they are capable to develop and to the planned application of the cement to which they shall be added.
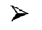 If necessary, grinding them preferably by means of any of the methods currently known down to the required size of particle (in the order of micres) so that the granulemetrics is suitable to the mechanical requirements planned for the cement.
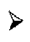 Changing the primitive global morphology of the puzolanes, by means of physical treatments of aggregation of their particles in the presence of liquid in quantities according to the selected method, which may be, optional and alternatively, some of the known methods such as granulation in an agitator of revolving shovels; atomization in a whirlwind for the centrifuge separation of the particles in suspension, peletization in a revolving drum.
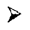 Adding the puzolane aggregates for their measured addition to the cement, those aggregates consisting of just one type of puzolanes or of several types and in this case, formed by nucleation by means of successive coverings of a mono-component nucleus by layers of the different puzolanes in independent physical treatments or else by mixture of particles of those puzolanes before starting the aggregation process.

### BRIEF DESCRIPTION OF THE DRAWINGS.

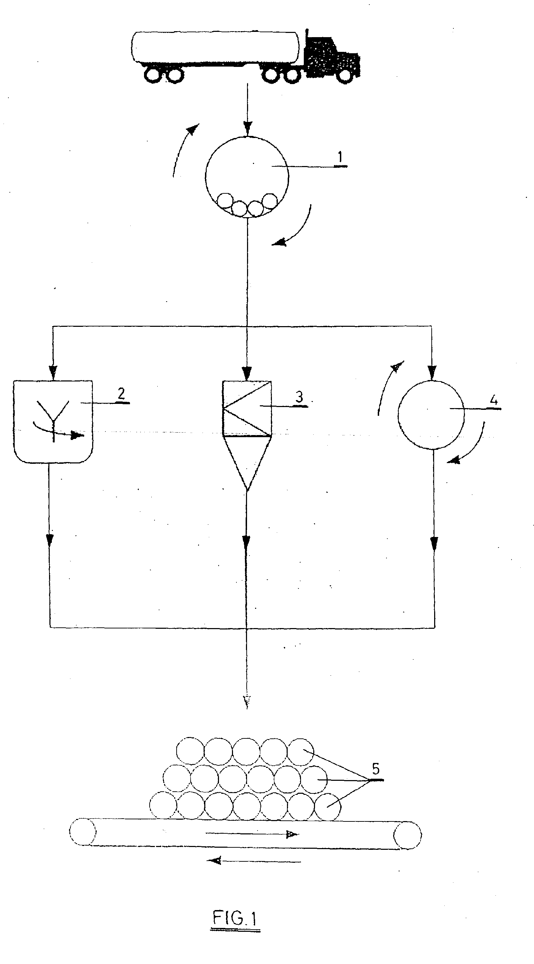

In order to complement the description of the invention and facilitate the understanding and the follow-up of the operations comprised in the "Method of morphological design of puzolanes to control the technical characteristics of the cements to which they are added" that constitute its object, Figure 1 is enclosed as a sequential outline of those operations, which shall be taken as an indicative guide of its preferential development.

### DESCRIPTION OF A PREFERENTIAL EMBODIMENT.

In order to show clearly the nature and reach of the advantageous application "Method of morphological design of puzolanes to control the technical characteristics of the cements to which they are added" which constitutes the object of the invention, the operations that make the method and its sequence up are next described referring to their outline that, since it represents a preferential embodiment of said object, with informative nature, shall be considered in its widest meaning and not as a limit to the application and the content of the invention.

The method is developed by means of the following operations, carried out with the same sequence as described :
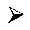 Selecting the puzolanes (natural or artificial), according to the strong activity that they are capable to develop and to the planned application of the cement to which they shall be added.
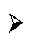 If necessary, grinding them preferably by means of any of the methods currently known (1) down to the required size of particle (in the order of micres) so that the granulemetrics is suitable to the mechanical requirements planned for the cement.
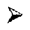 Changing the primitive global morphology of the puzolanes, by means of physical treatments of aggregation of their particles in the presence of liquid in quantities according to the selected method, which may be, optional and alternatively, some of the known methods such as granulation in an agitator of revolving shovels (2); atomization in a whirlwind (3) for the centrifuge separation of the particles in suspension, peletization in a revolving drum (4).
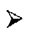 Adding the puzolane aggregates (5) for their measured addition to the cement, those aggregates consisting of just one type of puzolanes or of several types and in this case, formed by nucleation by means of successive coverings of a mono-component nucleus by layers of the different puzolanes in independent physical treatments or else by mixture of particles of those puzolanes before starting the aggregation process.

## Claims

1. ^{a} - Morphological method of design of puzolanes to control the technical characteristics of the cements to which they are added, **characterised by** the fact that the operations that make it up are the following, described with the same sequence as they are carried out :
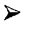 Selecting the puzolanes (natural or artificial), according to the strong activity that they are capable to develop and to the planned application of the cement to which they shall be added.
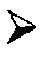 If necessary, grinding them preferably by means of any of the methods currently known (1) down to the required size of particle (in the order of micres) so that the granulemetrics is suitable to the mechanical requirements planned for the cement.
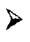 Changing the primitive global morphology of the puzolanes, by means of physical treatments of aggregation of their particles in the presence of liquid in quantities according to the selected method, which may be, optional and alternatively, some of the known methods such as granulation in an agitator of revolving shovels (2); atomization in a whirlwind (3) for the centrifuge separation of the particles in suspension, peletization in a revolving drum (4).
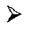 Adding the puzolane aggregates (5) for their measured addition to the cement, those aggregates consisting of just one type of puzolanes or of several types and in this case, formed by nucleation by means of successive coverings of a mono-component nucleus by layers of the different puzolanes in independent physical treatments or else by mixture of particles of those puzolanes before starting the aggregation process.
